Europäisches Patentamt

European Patent Office

Office européen des brevets

(11) Publication number: 0 181 758
A1

# (12) EUROPEAN PATENT APPLICATION

(21) Application number: 85308007.5

(22) Date of filing: 04.11.85

(51) Int. Cl.⁴: G 01 B 5/255

(30) Priority: 07.11.84 GB 8428169

(43) Date of publication of application:
21.05.86 Bulletin 86/21

(84) Designated Contracting States:
AT BE DE FR GB IT LU NL SE

(71) Applicant: Laycock Engineering Limited
Archer Road
Millhouses Sheffield S8 0JY(GB)

(72) Inventor: Sleath, Brian
39 Holmesdale Road
Dronfield Sheffield, S18 6FA(GB)

(72) Inventor: Cave, Lawrence John
6 Patterdale Close
Dronfield Woodhouse Sheffield, S18 5PW(GB)

(74) Representative: Dodd, Graham Marshall et al,
Guest Keen and Nettlefolds plc Group Patents and
Licensing Department P.O. Box 55 Ipsley House Ipsley
Church Lane
Redditch Worcestershire B98 0TL(GB)

(54) Wheel alignment testing apparatus.

(57) Wheel alignment testing apparatus comprising, for each wheel of a pair, a member (13, 14) having formations (15) adapted to contact a wheel part (10) so that the member takes up the wheel's attitude, a ground-engaging supporting structure (12) carrying the member, and an element (17) which is pressed into engagement with the wheel and ground and which abuts the member to hold it with its formations in contact with the wheel. Conventional means, e.g. optical, is provided for communicating the member's attitude to one at the other wheel of the pair. The necessity of clamping the member to a part of the wheel such as the rim, which can be difficult with modern wheel designs, is avoided.

FIG 1

GMD/P84.098

## WHEEL ALIGNMENT TESTING APPARATUS

This invention relates to apparatus for testing the alignment of a pair of wheels of a motor vehicle. Most commonly the wheels whose alignment is required to be checked are the front wheels of the vehicle, and the alignment parameter of interest is toe-in or toe-out thereof, but other aspects of wheel and suspension geometry can of course be measured.

Wheel alignment checking apparatus is known comprising, for each wheel, a member adapted to be connected to the wheel so as to take up the attitude of the wheel. The members are connected to the wheels by clip or clamp devices, engagable with the wheel rim or other part of the wheel or hub. The members have means for communicating their attitudes to one another to provide a measure of the alignment of the wheels. Commonly such communicating means is an optical system comprising a projector for a light beam, a mirror, and a scale which can be calibrated to provide a direct read out of the wheel alignment parameter required. With some designs of wheels, however, difficulties can be experienced in securing the members to the wheels, particularly with some types of cast alloy wheels. There may not be a wheel rim formation suitable for accepting clamps or like securing means. It is the object of the present invention to overcome this problem.

According to the invention we provide apparatus for testing the alignment of a pair of wheels of a motor vehicle, comprising, for each wheel, a member having formations adapted to contact a part of the wheel so that said member takes up the attitude of the wheel, and means
for communicating the attitude of said member to the
member having the attitude of the other wheel of the
pair, characterised in that said member is carried by a
ground-engaging supporting means, and there is provided
an element adapted to be pressed into engagement with
said wheel and the ground, and having a portion which
then abuts said member so that said member is held with
said formations thereof in contact with said part of the
wheel.

In apparatus according to the invention, the support
of the member which takes up the attitude of the wheel by
the ground-engaging supporting structure eliminates the
necessity for clamps or like means for securing the
member to the wheel itself.  The formations which contact
the wheel part, e.g. the rim, so that the member takes up
the wheel's attitude need merely abut a convenient
surface of the wheel part.  The element which is adapted
to engage the wheel and ground does not have to support
the weight of the member taking up the attitude of the
wheel, but merely ensure that its formations are held in
contact with the wheel.

Said element may comprise two limbs which extend
from the portion thereof which abuts said member, such
limbs having portions engagable between the tyre and
ground in front of and behind the area of contact of the
tyre with the ground.  Conveniently said element is made
by bending a single piece of elongated material, e.g. a
metal bar or tube.  The effectiveness of the element is
increased if it is resilient.

The invention will now be described by way of
example with reference to the accompanying drawing of
which:-

Figure 1 is a diagrammatic end view of apparatus
according to the invention;

Figure 2 is a diagrammatic side view of part of the
apparatus.

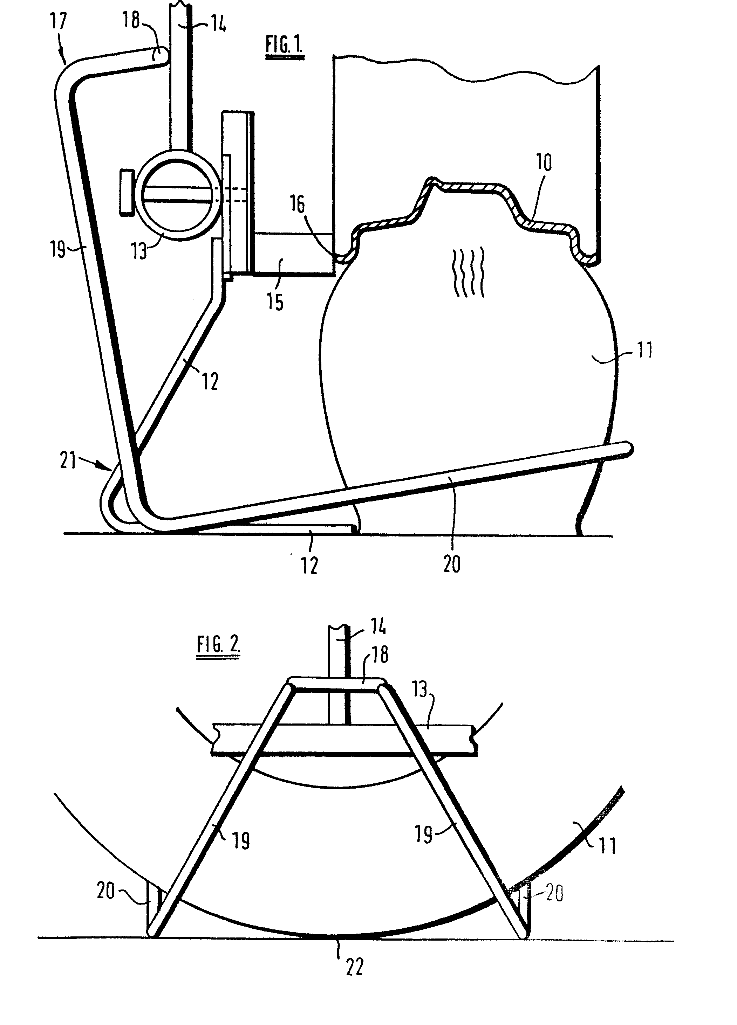

Referring firstly to Figure 1, there is shown
diagrammatically the rim 10 of a vehicle wheel, carrying
a tyre 11.

Apparatus for checking the alignment of the wheel
comprises a ground engaging support structure indicated
generally at 12. This carries a horizontally extending
tubular member 13, with an upwardly extending bar 14
connected thereto. The tubular member 13 carries two
spaced probes 15 whose position is adjustable so that the
probes can contact the edge 16 of the wheel rim at two
circumferentially spaced positions. Bar 14 carries a
further probe, not shown, adjustable to be able to
contact the edge of the wheel rim at an upper part
thereof.

The tubular member 13 is thus caused to take up the
attitude of the wheel. A corresponding member at the
wheel on the other side of the vehicle takes up the
attitude of that wheel. The two members are provided, as
is known for wheel alignment checking equipment, with an
optical system comprising a projector, mirror and a scale
for providing a reading of wheel alignment. Of course,
other types of means for communicating the attitude of
the members may be utilised.

For holding the member 13 such that its probes as 15 are in contact with the edge 16 of the wheel rim, an element 17 is provided. This is conveniently a one piece component formed by bending metal bar or thin tube to the shape indicated, which is also shown diagrammatically in Figure 2 from which detail such as the support structure 12 for the tubular member 13 has been omitted. Alternatively the element 15 may be a fabricated structure.

The element 17 comprises a portion 18 which abuts the bar 14, from opposite ends of which divergent limbs 19 extend. The free ends of limbs 19 are bent at right angles to the divergent parts of the limbs, as shown at 20. The spacing of parts 20 of the limbs is such that they are able to be pushed, in the direction of arrow 21, between the tyre 11 and the ground at positions in front of and behind the patch of contact 22 between the tyre and ground. The effect is one of wedging of the element 17 to exert a force to hold the probes of member 13 in contact with the wheel rim. The resilience of element 17 assist in this action.

It will be appreciated that the use of element 17 renders the wheel alignment checking apparatus suitable for use with a large range of sizes of wheel without modification, or requiring the use of additional parts.

CLAIMS

1.  Apparatus for testing the alignment of a pair of wheels of a motor vehicle, comprising, for each wheel, a member (13, 14) having formations (15) adapted to contact a part (10) of the wheel so that said member takes up the attitude of the wheel, and means for communicating the attitude of said member to the member having the attitude of the other wheel of the pair, characterised in that said member (13, 14) is carried by a ground-engaging supporting means (12), and there is provided an element (17) adapted to be pressed into engagement with said wheel (11) and the ground, and having a portion (18) which then abuts said member (13, 14) so that said member is held with said formations (15) thereof in contact with said part (10) of the wheel.

2.  Apparatus according to Claim 1 further characterised in that said element (17) comprises two limbs (19) extending from said portion (18) thereof, having portions (20) which engage between the wheel (11) and the ground at positions in front of and behind the area of contact (22) of the wheel with the ground.

3.  Apparatus according to Claim 2 further characterised in that said limbs (19) of said element (17) are resilient.

4.  Apparatus according to any one of the preceding claims further characterised in that said element (17) is bent from a single piece of elongate material.

1 | 1

0181758

FIG. 1.

FIG. 2.

European Patent
Office

**EUROPEAN SEARCH REPORT**

| | DOCUMENTS CONSIDERED TO BE RELEVANT | | EP 85308007.5 |
|---|---|---|---|

| Category | Citation of document with indication, where appropriate, of relevant passages | Relevant to claim | CLASSIFICATION OF THE APPLICATION (Int. Cl.4) |
|---|---|---|---|
| Y | DE - B - 1 548 224 (GOLDBRUNNER)<br>* Totality *<br>-- | 1,2,3 | G 01 B 5/255 |
| Y | US - A - 3 091 862 (MC MILLAN)<br>* Totality *<br>-- | 1,2,3 | |
| A | DE - A1 - 2 708 597 (APPLIED POWER)<br>* Claim 1; fig. 12,13 *<br>-- | 1 | |
| A | FR - A1 - 2 326 680 (MONIOT)<br>* Totality *<br>-- | | |
| A | US - A - 2 781 587 (HAUCKE)<br>* Totality *<br>---- | | |

| TECHNICAL FIELDS SEARCHED (Int. Cl.4) |
|---|
| G 01 B 3/00 |
| G 01 B 5/00 |
| G 01 B 7/00 |
| G 01 B 11/00 |
| G 01 B 21/00 |

The present search report has been drawn up for all claims

| Place of search | Date of completion of the search | Examiner |
|---|---|---|
| VIENNA | 17-02-1986 | TOMASELLI |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82